(19) Europäisches Patentamt
European Patent Office
Office européen des brevets

(11) **EP 1 905 685 B1**

(12) **EUROPÄISCHE PATENTSCHRIFT**

(45) Veröffentlichungstag und Bekanntmachung des Hinweises auf die Patenterteilung:
**21.07.2010 Patentblatt 2010/29**

(51) Int Cl.:
*B63B 17/00* (2006.01)     *B63H 21/30* (2006.01)
*F16M 5/00* (2006.01)     *F16M 7/00* (2006.01)

(21) Anmeldenummer: **07015047.9**

(22) Anmeldetag: **01.08.2007**

(54) **Vorrichtung und Verfahren zur bodenseitigen Befestigung einer Turbomaschine**

Device and method for attaching a turbo engine to the floor

Dispositif et procédé destinés à la fixation au sol d'une turbosoufflante

(84) Benannte Vertragsstaaten:
**DE FR**

(30) Priorität: **29.09.2006 DE 102006046809**

(43) Veröffentlichungstag der Anmeldung:
**02.04.2008 Patentblatt 2008/14**

(73) Patentinhaber: **ATLAS COPCO ENERGAS GMBH**
**50999 Köln (DE)**

(72) Erfinder: **Struck, Henning**
**50389 Wesseling (DE)**

(74) Vertreter: **Albrecht, Rainer Harald et al**
**Andrejewski - Honke**
**Patent- und Rechtsanwälte**
**P.O. Box 10 02 54**
**45002 Essen (DE)**

(56) Entgegenhaltungen:
**DE-A1- 4 227 924     DE-U1- 20 220 691**
**JP-A- 61 066 806     US-A- 5 503 360**

## Beschreibung

Die Erfindung betrifft eine Vorrichtung zur bodenseitigen Befestigung einer Turbomaschine, insbesondere auf einem Schiff oder einer meerestechnischen Einrichtung, mit mindestens einem die Turbomaschine aufnehmenden, jeweils mindestens eine Bodenfläche aufweisenden Aufnahmerahmen, auf der sich der Aufnahmerahmen im befestigten Zustand abstützt und im Bereich der Bodenfläche angeordneten Befestigungsmitteln zur Befestigung des Aufnahmerahmens auf einer bodenseitigen Kontaktfläche. Gegenstand der Erfindung ist auch ein Verfahren zur bodenseitigen Befestigung einer Turbomaschine.

Üblicherweise werden die Rahmen von Turbomaschinen mit dem dafür vorgesehenen Fundament verschraubt. Dies ist bei feststehenden Fundamenten, bei denen keine Beschleunigungen in Richtung der Fundamentebene aufzunehmen sind, problemlos. Bei der Montage einer Turbomaschine auf einem sich bewegenden Untergrund hingegen, beispielsweise auf einem Schiff, oder aber generell auf einer Vibrationen bzw. Erschütterungen ausgesetzten meerestechnischen Einrichtung besteht das Problem, dass sehr große Querkräfte in Fundament bzw. Deckebene aufgenommen werden müssen, um eine Verschiebung der Turbomaschine relativ zum Fundament bzw. zum Deck zu vermeiden. Bei schweren Turbomaschinen ist daher die üblicherweise verwendete, standardisierte Verschraubung häufig nicht realisierbar. Stattdessen muss die Befestigung mittels einer sehr viel höheren Anzahl von Befestigungsschrauben erfolgen. Alternativ hierzu ist es auch bekannt, die Befestigung der Turbomaschine mittels Schweißverbindungen herzustellen. Diese Maßnahme ist in der Praxis jedoch häufig nicht umsetzbar.

Aus der Druckschrift DE 42 27 924 A1 ist ein Fundamentanker zur Befestigung von Maschinen oder anderen Bauteilen auf einem Fundament bekannt, der einen Ankerbolzen aufweist. Der Ankerbolzen stützt sich an seinem unteren Ende an oder in dem Fundament und am oberen Ende an einem Maschinenfuß ab, wobei zur Überbrückung der Distanzen zwischen der Unterseite des Maschinenfußes und dem Fundament eine aus drei geschlitzten Keilen bestehende Anordnung vorgesehen ist. Die geschlitzten Keile sind gegeneinander verdrehbar und relativ zu einander verschiebbar, so dass eine vertikale Höheneinstellung vorgenommen werden kann.

Aus der JP 61 066806 A ist ein Aufnahmerahmen für eine Turbine bekannt, wobei im Falle eines Erdbebens die auftretenden Belastungen reduziert werden sollen. Dazu ist vorgesehen, den an sich steifen Rahmen zweigeteilt auszuführen und zwischen den Teilen separate Reibeinlagen anzuordnen. Die Rahmenteile sind dabei mit einem Bolzen verbunden, der als Sollbruchstelle ausgeführt ist. Bei Überschreiten einer maximal zulässigen Belastung bricht dieser Bolzen, wobei die dann zwischen den Reibeinlagen auftretende Gleitreibung eine Umwandlung von mechanischer Energie in Wärmeenergie und damit eine Reduzierung der mechanischen Belastungen bewirkt.

Der Erfindung liegt die Aufgabe zugrunde, eine Vorrichtung zur bodenseitigen Befestigung einer Turbomaschine anzugeben, die auch bei Erschütterungen bzw. Vibrationen parallel zur Bodenebene auf einfache Weise eine sichere Arretierung der Turbomaschine gewährleistet.

Ausgehend von einer Vorrichtung mit den eingangs beschriebenen Merkmalen wird die Aufgabe erfindungsgemäß dadurch gelöst, dass mindestens eine der Bodenflächen aufgeraut ist, um die Haftreibung zwischen Boden- und Kontaktfläche zu erhöhen. Die Erfindung geht von der Überlegung aus, die maximal aufnehmbare Querkraft $Q_{max}$, welche sich gemäß der Formel

$$Q_{max} = \mu \cdot F$$

berechnet, nicht durch eine Erhöhung der Anpresskraft F zwischen Boden- und Kontaktfläche, sondern stattdessen durch eine Anhebung der Haftreibungszahl $\mu$ zu erhöhen. Vorzugsweise wird die Bodenfläche hierzu in einem separaten Vorgang bearbeitet, insbesondere sandgestrahlt.

Der Aufnahmerahmen kann mehrere Tragfüße aufweisen, deren Unterseiten die Bodenflächen darstellen. Die Befestigungsmittel können als Schrauben ausgebildet sein, die Bohrungen in den Tragfüßen durchfassen.

Gegenstand der Erfindung ist auch ein Verfahren zur bodenseitigen Befestigung eines mindestens eine Bodenfläche aufweisenden Aufnahmerahmens einer Turbomaschine auf einer Kontaktfläche, die sich insbesondere auf einem Schiff oder einer meerestechnischen Einrichtung befindet, wobei die Befestigung mittels im Bereich der Bodenfläche vorgesehenen Befestigungsmitteln erfolgt. Erfindungsgemäß werden/wird die Bodenfläche und/oder die Kontaktfläche zur Erhöhung der Haftreibung zwischen diesen Flächen aufgeraut. Mittels eines bevorzugten Sandstrahlens der Bodenfläche und/oder der Kontaktfläche sind Haftreibungszahlen $\mu$ von bis zu 0,5 erreichbar. Eine weitere bevorzugte Ausführungsform des erfindungsgemäßen Verfahrens ist in Anspruch 7 beschrieben.

Im Folgenden wird die Erfindung anhand einer lediglich ein Ausführungsbeispiel darstellenden Zeichnung ausführlich erläutert. Es zeigen schematisch:

Fig. 1    eine dreidimensionale Ansicht mehrerer Rahmen zur Aufnahme einer Turbomaschine,

Fig. 2    eine ausschnittsweise Vergrößerung der Fig. 1 und

Fig. 3    eine Darstellung der im Bereich des in Fig. 2 dargestellten Ausschnittes wirkenden Kräfte.

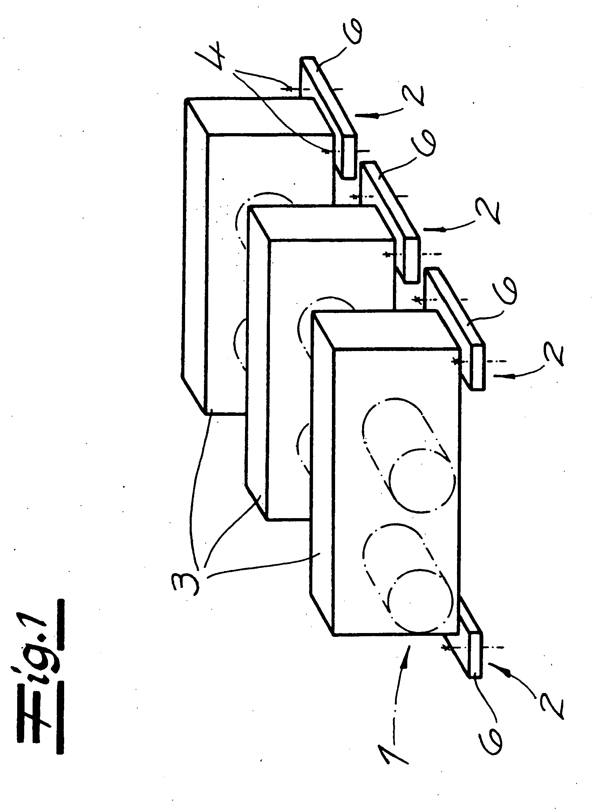

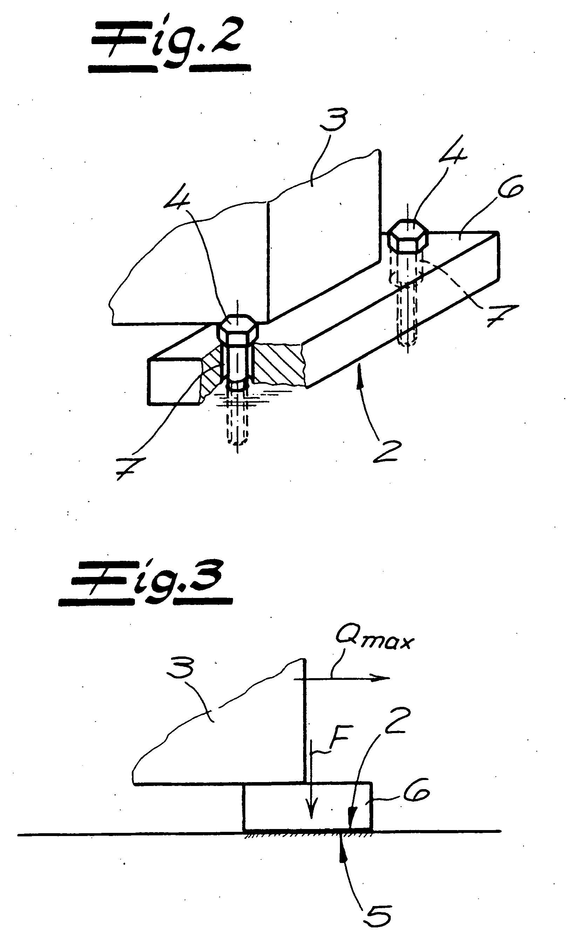

Die Fig. 1 zeigt eine Vorrichtung zur bodenseitigen Befestigung einer Turbomaschine 1, welche ohne Motor und Core-Unit dargestellt ist. Die Vorrichtung dient zur Befestigung der Turbomaschine 1 auf einem Schiff oder einer meerestechnischen Konstruktion. Die Vorrichtung weist mehrere die Turbomaschine 1 aufnehmende, jeweils zwei Bodenflächen 2 aufweisende Aufnahmerahmen 3 auf, auf denen sich die Aufnahmerahmen 3 im befestigten Zustand abstützen. Aus Fig. 2 und 3 ist ersichtlich, dass im Bereich der Bodenflächen 2 Befestigungsmittel 4 zur Befestigung der Aufnahmerahmen 3 auf einer bodenseitigen Kontaktfläche 5 des Schiffes oder der meerestechnischen Konstruktion vorgesehen sind. Die Bodenflächen 2 und die zugehörigen Kontaktflächen 5 sind mittels eines Sandstrahlvorganges aufgeraut, um die Haftreibung zwischen Boden- und Kontaktfläche 2, 5 zu erhöhen. Die Aufnahmerahmen 3 weisen jeweils zwei Tragfüße 6 auf, deren Unterseiten die Bodenflächen 2 darstellen. Die Fig. 2 zeigt, dass die Befestigungsmittel 4 als Schrauben ausgebildet sind, die Bohrungen 7 in den Tragfüßen 6 durchfassen.

Die Fig. 3 zeigt die im Bereich der Tragfüße 6 wirkenden Kräfte. Die Unterseiten der Tragfüße 6, welche die Bodenflächen 2 darstellen, werden mit einer Kraft F, deren Größe vom Gewicht der Rahmen 3 und der Turbomaschine 1 sowie von der Vorspannungskraft der Schrauben 4 abhängt, gegen die Kontaktflächen 5 gepresst. Die maximal aufnehmbare Querkraft $Q_{max}$ ist sowohl proportional abhängig von der Kraft F als auch von der zwischen der Boden- und der Kontaktfläche 2, 5 wirkenden Haftreibungszahl $\mu$. Erfindungsgemäß wird eine Erhöhung der maximal aufnehmbaren Querkraft $Q_{max}$ durch eine Erhöhung der Haftreibungszahl $\mu$ anstelle einer Erhöhung der Anpresskraft F erzielt.

**Patentansprüche**

1. Vorrichtung zur bodenseitigen Befestigung einer Turbomaschine (1), insbesondere auf einem Schiff oder einer meerestechnischen Einrichtung, mit mindestens einem die Turbomaschine (1) aufnehmenden, jeweils mindestens eine Bodenfläche (2) aufweisenden Aufnahmerahmen (3), auf der sich der Aufnahmerahmen (3) im befestigen Zustand abstützt, und im Bereich der Bodenfläche (2) angeordneten Befestigungsmitteln (4) zur Befestigung des Aufnahmerahmens (3) auf einer bodenseitigen Kontaktfläche (5), **dadurch gekennzeichnet, dass** mindestens eine der Bodenflächen (2) aufgeraut ist, um die Haftreibung zwischen Boden- und Kontaktfläche (2, 5) zu erhöhen.

2. Vorrichtung nach Anspruch 1, **dadurch gekennzeichnet, dass** die Bodenfläche (2) sandgestrahlt ist.

3. Vorrichtung nach Anspruch 1 oder 2, **dadurch gekennzeichnet, dass** der Aufnahmerahmen (3) mehrere Tragfüße (6) aufweist, deren Unterseiten die Bodenflächen (2) darstellen.

4. Vorrichtung nach Anspruch 3, **dadurch gekennzeichnet, dass** die Befestigungsmittel (4) als Schrauben ausgebildet sind, die Bohrungen (7) in den Tragfüßen durchfassen.

5. Verfahren zur bodenseitigen Befestigung eines mindestens eine Bodenfläche aufweisenden Aufnahmerahmens einer Turbomaschine auf eine Kontaktfläche, die sich insbesondere auf einem Schiff oder einer meerestechnischen Einrichtung befindet, wobei die Befestigung mittels im Bereich der Bodenfläche vorgesehenen Befestigungsmitteln erfolgt, **dadurch gekennzeichnet, dass** die Bodenfläche und/oder die Kontaktfläche zur Erhöhung der Haftreibung zwischen diesen Flächen aufgeraut werden/wird.

6. Verfahren nach Anspruch 5, **dadurch gekennzeichnet, dass** die Bodenfläche und/oder die Kontaktfläche sandgestrahlt werden.

7. Verfahren nach Anspruch 6, **dadurch gekennzeichnet, dass** als Befestigungsmittel Schrauben verwendet werden.

**Claims**

1. A device for a base-side fastening of a turbo engine (1), in particular on a ship or an oceanic equipment, comprising at least one accommodating frame (3), which accommodates the turbo engine (1) and which encompasses in each case at least one base surface (2) on which the accommodating frame (3) is supported when in the fastened state and fastening means (4) arranged in the area of the base surface (2) for fastening the accommodating frame (3) on a base-side contact surface (5), **characterized in that** at least one of the base surfaces (2) is roughened so as to increase the adhesion between base and contact surface (2, 5).

2. The device according to claim 1, **characterized in that** the base surface (2) is sand-blasted.

3. The device according to claim 1 or 2, **characterized in that** the accommodating frame (3) encompasses a plurality of support bases (6), the undersides of which represent the base surfaces (2).

**4.** The device according to claim 3, **characterized in that** the fastening means (4) are embodied as screws, which engage through boreholes (7) in the support bases.

**5.** A method for a base-side fastening of an accommodating frame of a turbo engine encompassing at least one base surface onto a contact surface, which is in particular located on a ship or an oceanic equipment, wherein the fastening is carried out by means of fastening means, which are provided in the area of the base surface, **characterized in that** the base surface and/or the contact surface is/are roughened so as to increase the adhesion between these surfaces.

**6.** The method according to claim 5, **characterized in that** the base surface and/or the contact surface are sand-blasted.

**7.** The method according to claim 6, **characterized in that** screws are used as fastening means.

**Revendications**

**1.** Dispositif pour la fixation au sol d'une turbomachine (1), notamment sur un navire ou une installation en milieu marin,
avec au moins un cadre de réception (3) recevant la turbomachine (1), chacun présentant au moins une surface de sol (2) sur laquelle s'appuie le cadre de réception (3) à l'état fixé, et
des moyens de fixation (4) disposés dans la zone de la surface de sol (2), destinés à la fixation du cadre de réception (3) sur une surface de contact (5) côté sol,
**caractérisé en ce qu'**au moins l'une des surfaces de sol (2) est rendue rugueuse pour augmenter le frottement d'adhérence entre les surfaces de sol et de contact (2, 5).

**2.** Dispositif selon la revendication 1, **caractérisé en ce que** la surface de sol (2) est décapée au sable.

**3.** Dispositif selon la revendication 1 ou 2, **caractérisé en ce que** le cadre de réception (3) présente plusieurs pieds de support (6) dont les côtés inférieurs représentent les surfaces de sol (2).

**4.** Dispositif selon la revendication 3, **caractérisé en ce que** les moyens de fixation (4) se présentent sous forme de vis pénétrant à travers des alésages (7) ménagés dans les pieds de support.

**5.** Procédé pour la fixation au sol d'un cadre de réception présentant au moins une surface de sol d'une turbomachine sur une surface de contact, turbomachine qui se trouve notamment sur un navire ou une installation en milieu marin, la fixation s'effectuant à l'aide de moyens de fixation prévus dans la zone de la surface de sol, **caractérisé en ce que** l'on rend rugueuse(s) la surface de sol et/ou la surface de contact pour augmenter le frottement d'adhérence entre ces surfaces.

**6.** Procédé selon la revendication 5, **caractérisé en que** l'on décape au sable la surface de sol et/ou la surface de contact.

**7.** Procédé selon la revendication 6, **caractérisé en ce que** l'on utilise des vis comme moyens de fixation.

Fig.1

$Fig.2$

$Fig.3$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4227924 A1
- JP 61066806 A